# EUROPÄISCHE PATENTSCHRIFT

(11) **EP 1 954 531 B1**
(45) Veröffentlichungstag und Bekanntmachung des Hinweises auf die Patenterteilung: **24.11.2010**
(21) Anmeldenummer: 06818933.1
(22) Anmeldetag: 28.11.2006
(51) Int. Cl.: B60R 13/02, B29C 45/14, B60Q 1/30, D02G 3/04, D02G 3/06, D02G 3/44, B60Q 1/32

(54) **INNENVERKLEIDUNGSTEIL MIT REFLEKTIERENDER OBERFLÄCHE**
INTERIOR TRIM PIECE WITH A REFLECTIVE SURFACE
PIÈCE D'HABILLAGE INTÉRIEURE À SURFACE RÉFLÉCHISSANTE

(30) Priorität: 28.11.2005 DE 102005057331; 28.11.2005 DE 102005057282
(43) Veröffentlichungstag der Anmeldung: 13.08.2008
(73) Patentinhaber: Faurecia Innenraum Systeme GmbH, 76767 Hagenbach (DE)
(72) Erfinder: VASILJ, Ante, 67661 Kaiserslautern (DE); KREIDEMACHER, Oliver, 64653 Lorsch (DE); WENDLAND, Stefan, 56412 Görgeshausen (DE)
(74) Vertreter: Pfenning, Meinig & Partner GbR
(86) Internationale Anmeldenummer: PCT/EP2006/011521
(87) Internationale Veröffentlichungsnummer: WO 2007/060025

(56) Entgegenhaltungen:
- DE-A1- 4 441 732
- DE-A1- 10 309 674
- DE-A1-102004 012 937
- JP-A- 5 008 249
- US-A- 2 937 668
- US-A- 4 397 142
- US-A- 4 697 407
- US-A1- 2003 129 359

## Beschreibung

Die Erfindung betrifft ein Innenverkleidungsteil eines Fahrzeugs mit zumindest bereichsweise reflektierender Oberfläche nach dem Oberbegriff des Anspruchs 1 sowie ein Verfahren zur Herstellung eines Verkleidungsteils mit reflektierender Oberfläche nach dem Oberbegriff des Anspruchs 15.

In der Automobilindustrie sind Innenverkleidungsteile bekannt, welche mit einem Licht reflektierendem Element ausgestattet sind. Ein gattungsbildendes Innenverkleidungsteil und ein Herstellungsverfahren sind aus der US 2003/0129359 A1 bekannt.

Die Erfindung setzt sich zur Aufgabe, ebenfalls ein Verkleidungsteil mit einem Material mit reflektierenden Eigenschaften zu schaffen, welches allerdings gegenüber dem Stand der Technik wesentlich flexibler eingesetzt werden kann und somit insbesondere ein breiteres Anwendungsspektrum aufweist.

Diese Aufgaben werden durch ein Innenverkleidungsteil mit den Merkmalen des unabhängigen Anspruchs 1 und ein Verfahren mit den Merkmalen des unabhängigen Anspruchs 15 gelöst.

Der Terminus "retroreflektierend" ist hierbei von entscheidender Wichtigkeit. Unter "retroreflektierend" wird Folgendes verstanden:
"Retroreflexion ist eine Reflexion, bei der das einfallende Licht weitgehend unabhängig von der Anleuchtungsrichtung in Richtungen zurückgestrahlt wird, die der Anleuchtungsrichtung nahe liegen. Retroreflexion wird durch katadioptrisch (brechend und spiegelnd) wirkende Teile erzeugt."

Solche Eigenschaften werden vorliegend primär durch "Reflexstoffe" erzeugt. Reflexstoffe sind hierbei Materialien mit retroreflektierenden Eigenschaften, bei denen die Retroreflexion durch eine große Anzahl sehr kleiner katadioptrisch wirkender Teile erzeugt wird.

Diese Anwendung retroreflektierender Teile im Fahrzeuginnenraum hat ganz besondere Eigenschaften.

Üblicherweise ist ausgewiesene Reflexion (also keine Retroreflexion) im Fahrzeug nicht gewollt, da entsprechendes Streulicht im Innenraum für den Fahrzeugführer sehr gefährlich und irritierend sein kann. Bei der Retroreflektion nimmt die reflektierte Lichtdichte mit Verlassen des optimalen Retro-Reflexbereiches sehr schnell und stark ab, so dass eine entsprechende Gefahr dadurch nicht gegeben ist.

Dadurch, dass hier allerdings Retroreflexion zum Einsatz kommt, wird erreicht, dass beispielsweise eine entsprechende retroreflektierende Oberfläche auf einer Innenverkleidung einer Fahrzeugtür bei geöffneter Fahrzeugtür den von hinten nahenden Verkehr warnt. Besonders gut ist hierbei, dass weitgehend unabhängig vom Öffnungswinkel der Tür (40°, 50°, 60° bzw. 70°) dieselbe "Rückstrahlungsdichte/Rückstrahlungsintensität" gegeben ist. Dies sorgt dafür, dass weitgehend unabhängig vom Öffnungswinkel immer eine starke Rückreflexion.gegeben ist, und zwar in genau die gewollte Richtung, nämlich die Richtung eines herannahenden Fahrzeugs. Diese Richtungsunabhängigkeit wird sonst nur von selbstleuchtenden, beispielsweise elektrischen, Leuchten erzeugt, welche jedoch sehr viel aufwendiger sind bzw. hohe Streuwinkel und Energieverzehr haben.

Vorliegend empfiehlt sich die Anwendung dieser retroreflektierenden Oberflächen bei Innenverkleidungsteilen, welche von außen, beispielsweise vom entgegenkommenden oder nachfolgenden Verkehr sichtbar sind. Dies können vorzugsweise eine Innenauskleidung einer Heckklappe bzw. einer Motorraumklappe sein. Besonders empfiehlt sich dies für die Innenverkleidung von Fahrzeugtüren. Aber auch für weitere Innenverkleidungselemente, beispielsweise in der Hutablage, ist ein großer Nutzen gegeben. Schließlich sind auch die Fahrzeugsitze, dort insbesondere die Kopfstützen und die nach außen gerichteten Sitzwangen für diese Anwendung geeignet. Als "retroreflektierend" werden im Sinne dieser Anmeldung insbsondere Materialien verstanden, welche die Mindestrückstrahlwerte der DIN 67520, Teil 2 erfüllen. Bezüglich der entsprechenden Messmethode wird auf die DIN 67520, Teil 1 verwiesen.

Für Reflexstoffe mit eingebundenen Mikroglaskugeln (=Typ 1) wird beispielsweise bei einem Beobachtungswinkel α=0,2°, der Aufsichtfarbe weiß und β₁=5° (β₂=0) ein Mindestrückstrahlwert R' in cd 1x-¹m⁻² von 80, zumindest aber 50, verstanden. Entsprechend wird für Typ 2 (Reflexstoffe mit eingekapselten Mikroglaskugeln) bei denselben vorgenannten Randbedingungen ein Mindestrückstrahlwert für die Aufsichtfarbe weiß von vorzugsweise mehr als 250, zumindest >150 verlangt.

Für hier nicht klassifizierte andere Typen (beispielsweise Reflexstoffe mit prismatischen Anordnungen) werden die entsprechenden Mindeststandards verlangt.

Es geht bei der vorgenannten Definition primär darum, in Zweifelsfällen eine Abgrenzung von retroreflektierenden Materialen und üblich nur reflektierenden Materialien herzustellen. Üblicherweise sollte jedoch die oben genannte Definition der Retroreflexion (ohne Zahlenwerte) ausreichend sein, da in den Augen eines Fachmanns diese präzise genug ist (weitgehend unabhängig von irgendwelchen Normen).

Die Erfindung wird vorliegend anhand von zwei besonders bevorzugten Ausführungsbeispielen erklärt.

Hierbei handelt es sich bei der erstgenannten Ausführung um eine Oberfläche, welche ein eingewebtes Garn bzw. einen eingewebten Zwirn aus vorgenannten retroreflektierenden Materialien aufweist.

In einer weiteren Ausführungsform können allerdings auch normale Folien mit diesen retroreflektierenden Eigenschaften genannt werden. Zu beiden Beispielen werden am Ende dieser Patentanmeldung Beispiele in zeichnerischer Form gezeigt.

Es ist besonders vorteilhaft, dass die Oberflächen mit den hervorragenden Sicherheitseigenschaften im Normalbetrieb (z.B. tagsüber) nicht störend glänzen bzw. unnötiges Streulicht versenden.

Aufgrund der Flexibilität bzw. der Formbarkeit lässt sich ein reflektierendes Gewebe an nahezu beliebige Konturen des Innenverkleidungsteils anpassen. Daher können fast sämtliche Bereiche des Innenverkleidungsteils mit einem derartigen Gewebe sichtseitig ausgestattet sein. Im Gegensatz dazu sind beispielsweise Katzenaugen aufgrund ihrer Steifheit und Sperrigkeit nur in wesentlich beschränkterem Rahmen einsetzbar. Katzenaugen haben auch eine starke Einschränkung bezüglich des Anleucht-/Beobachtungswinkels. Beispielsweise bei einem Katzenauge in einem Türinnenverkleidungsteil ist die Rückstrahlung bei senkrechter Lichteinstrahlung gut. Beim Abweichen von senkrechter Einstrahlung (beispielsweise bei nur teilweise geöffneter Tür) sind die Rückstrahlwerte (z.B. für nachfolgende Fahrzeuge) unbefriedigend.

Des Weiteren lässt sich das reflektierende Gewebe direkt als Bestandteil des Innenverkleidungsteils im Herstellungsverfahren integrieren. Ein Beispiel hierfür ist das übliche Verfahren zur Herstellung eines Innenverkleidungsteils durch ein Spritzgussverfahren. Weitere mögliche Verarbeitungsverfahren, um das Gewebe mit einer rückseitigen Schicht zu verbinden, sind Hinterpressen, Spritzpressen, Gießhautverfahren oder Kaschieren, insbesondere Laminieren und Hinterspritzprägen.

Bei Katzenaugen dagegen ist es üblich, diese nachträglich an dem Innenverkleidungsteil zu befestigen, beispielsweise einzuclipsen, aufzukleben oder festzuschrauben.

Ein Innenverkleidungsteil eines Fahrzeugs mit einer Außenschicht aus einem reflektierenden oder retroreflektierenden Gewebe ist nicht nur bezüglich des Designs des Innenraums eines Fahrzeugs interessant, sondern auch bezüglich der Verkehrssicherheit.

Betreffs des Designs lassen sich beispielsweise Dekostreifen, Muster oder aber auch Namenszüge als reflektierender oder retroreflektierender Bereich in einem die Außenschicht bzw. Dekorschicht bildenden Gewebe durch Einweben oder Verweben reflektierender Garne erzeugen.

Betreffs der Verkehrssicherheit weist vorteilhafterweise insbesondere die Türinnenverkleidung Bereiche mit einer Dekorschicht aus Gewebe auf, in dem ein reflektierendes oder insbesondere retroreflektierendes Garn eingewebt ist. Geöffnete Türen werden dadurch bei schlechten Sichtverhältnissen dem Verkehr besser sichtbar gemacht. Als Elemente der Türinnenverkleidung bieten sich insbesondere oben schon genannter Haltegriff an, sowie Armauflage, Türöffner, Tür-Insert, Brüstung, oder Staufach bzw. Kartentasche und Kartentaschenrückwand.

Vorteilhafte Weiterbildungen der Anordnung mit Garnen bzw. Zwirnen sind gegeben.

Eine vorteilhafte Weiterbildung der Erfindung sieht vor, dass das Garn oder der Zwirn mehrere miteinander versponnene Filamente aufweist, wobei die Filamente zumindest teilweise reflektierend oder retroreflektierend sind. Es sollen nun noch einige Begriffe in ihrer grundsätzlichen Bedeutung kurz erläutert werden. Generell wird Garn mit anderen Garnen/Zwirnen zu Textil (Dekor) verwebt. Zwirn ist generell zum Nähen (und Verweben) gedacht und wird aus Garnen gesponnnen (verzwirnt). Reflektierendes Garn ist vorzugsweise als in schmale Bändchen geschnittene Folie (beispielsweise aus Polyester mit einer darauf aufgebrachten Retroreflexschicht) aufgebaut. Wenn entsprechendes Garn in ein Textil verwebt wird, ergibt sich eine Textilbahn mit eingewebten Garnen oder Zwirnen. Zwirn entsteht durch das Verspinnen verschiedener Garne.

Erfindungsgemäß setzt sich das reflektierende oder retroreflektierende Garn oder der Zwirn aus Trägerfilamenten und reflektierenden Filamenten zusammen. Die Trägerfilamente stützen die reflektierenden Filamente und ermöglichen erst oder verbessern zumindest dadurch die Verarbeitung eines derartigen Garns oder Zwirns. Zum anderen lässt sich mittels der Trägerfilamente eine bestimmte Ausrichtung der reflektierenden Filamente innerhalb des Garns oder des Zwirns erreichen, so dass der Garn oder der Zwirn sich mit gewünschter Ausrichtung zu einem Gewebe verweben oder in ein Gewebe einweben lässt.

Des Weiteren kann durch den Anteil der Trägerfilamente der Anteil der reflektierenden Filamente beeinflusst werden. So lässt sich das Garn bzw. der Zwirn bezüglich der Stärke, des Umfangs, der Reflektoreigenschaft, und auch im Hinblick auf die Kosten vorteilhaft zusammensetzen.

Erfindungsgemäß bevorzugt ist ein Anteil von reflektierenden Filamenten von 1% bis 40%. Bei diesem Anteil ist das reflektierende Garn oder der Zwirn noch relativ kostengünstig herstellbar, besitzt aber trotzdem gute Reflektoreigenschaften, insbesondere für die erfindungsgemäß vorgesehene Verwendung als Garn für ein die Dekorschicht eines Innenverkleidungsteils bildendes Gewebe.

Ein weiterer Vorteil der Verzwirnung mit Trägerfilamenten ist, dass sich mit den Trägerfilamenten neben den mechanischen Eigenschaften auch haptische Eigenschaften des mit dem Garn oder Zwirn hergestellten Gewebes beeinflussen lassen.

Besonders vorteilhaft ist, dass das erfindungsgemäße Garn sich mit für die Herstellung von Geweben gängigen Maschinen verarbeiten lässt.

Eine weitere vorteilhafte Weiterbildung der Erfindung sieht vor, dass die nicht reflektierenden Filamente zumindest teilweise aus Kunststoff, vorzugsweise aus Polyester, PP, PE, PES oder PA bestehen.

Auch eine Kombination mehrerer Arten von Filamenten ist möglich. Auch können die Filamente selbst ein Garn sein.

Eine weitere vorteilhafte Weiterbildung der Erfindung sieht vor, dass die reflektierenden oder retroreflektierenden Filamente zumindest teilweise reflektierende oder retroreflektierende Bändchen sind.

Derartige Bändchen können einseitig, aber auch beidseitig reflektierend oder retroreflektierend sein.

Herstellen lassen sich derartige Bändchen beispielsweise durch die Beschichtung eines als Trägerschicht dienenden Films mit einer reflektierenden oder retroreflektierenden Schicht und anschließendem Zuschneiden dieses Films oder dieser Folie in einzelne Bändchen.

Die erfindungsgemäß bevorzugten reflektierenden Bändchen haben eine Breite im Bereich von 0,2 mm bis 2 mm und eine Höhe im Bereich von 0,1 mm bis 1 mm. Derartige Bändchen sind besonders gut für die Verzwirnung geeignet.

Die als Träger verwendeten Filamente haben vorzugsweise einen Durchmesser im Bereich von 0,1 mm bis 1 mm. Das Garn, aus dem das Gewebe hergestellt wird, hat vorteilhafterweise einen Durchmesser im Bereich von 0,1 mm bis 1 mm.

Alternativ ist es auch möglich, auf ein Verspinnen oder eine Verzwirnung der Bändchen zu verzichten, d.h., das erfindungsgemäße reflektierende Garn würde in diesem Falle durch ein Bändchen allein dargestellt werden. Reine Bändchen lassen sich bei der Herstellung des reflektierenden Gewebes sowohl aus Schuss- als auch als Kettfäden einarbeiten.

Eine weitere vorteilhafte Weiterbildung der Erfindung sieht vor, dass die retroreflektierenden Bändchen an ihrer Außenfläche in eine Trägerschicht eingebettete Glaskörper wie Glaskugeln oder -prismen aufweisen.

Der retroreflektierende Effekt wird durch die geeignete Brechung bzw. Reflektion des einfallenden Lichts erreicht. Körper, mit denen sich ein derartiger Effekt erreichen lässt, sind beispielsweise oben angegebene Glaskugeln. Auch durch eine prismatische Form der Oberfläche, beispielsweise durch Prismenprägungen in geeigneten Kunststoffen, kann eine Retroreflexion erzeugt werden.

Vorzugsweise befindet sich an der Rückseite der Glaskörper, sei es direkt an der Oberfläche der Glaskörper oder durch ein oder mehrere transparente Schichten getrennt, eine Reflexionsschicht. In Verbindung mit den Glaskörpern wird hierdurch die retroreflektierende Eigenschaft eines derartigen Bändchens erreicht. Als Reflexionsschicht bietet sich beispielsweise ein Metallfilm oder eine Metallbeschichtung an.

Vorzugsweise sind die Glaskörper nach außen von einer transparenten Deckschicht abgedeckt.

Die Erfindung sieht vor, dass zwischen Trägerschicht und Außenschicht eine Zwischenschicht angeordnet ist.

Im Herstellungsverfahren lässt sich eine Zwischenschicht als Sperrschicht zwischen Trägerschicht und erfindungsgemäßem Gewebe vorteilhaft verwenden. Das Gewebe lässt sich auf diese Weise gegen einen direkten Kontakt oder ein Durchdringen mit dem Material der Trägerschicht abschirmen. Des Weiteren kann durch die Zwischenschicht das Gewebe, insbesondere wenn das Innenverkleidungsteil durch einen Spritzgussprozess hergestellt wird, gegen überhöhten Druck geschützt werden.

Weiterhin sieht die Erfindung vor, dass die Zwischenschicht eine Schaumschicht und zur Trägerschicht hin ein Vlies aufweist. Um eine gute Verbindung zwischen Trägerschicht und Schaumschicht zu gewährleisten, wird erfindungsgemäß das Vlies, insbesondere ein Nadelvlies, eingesetzt.

Auch Folien, ein Gewirke oder ein Gewebe kann gleichfalls Bestandteil der Zwischenschicht sein.

Mit einer Schaumschicht lässt sich die Haptik des erfindungsgemäßen Verkleidungsteils verändern.

Eine weitere vorteilhafte Weiterbildung der Erfindung sieht vor, dass die Zwischenschicht eine Dicke im Bereich von 1 mm bis 5 mm aufweist.

Als Material für die Trägerschicht wird ein Kunststoff, vorzugsweise ein Polyolefin, insbesondere Polypropylen, sowie ABS, POM, PC/ABS, oder aber auch ein Naturstoff, insbesondere mit Naturfasern verstärktes PP, bevorzugt. Des Weiteren kann die Trägerschicht Zusatzstoffe wie Mineralien, beispielsweise Talkum, oder Fasern, beispielsweise Glasfasern oder aber auch Naturfasern wie Hanf oder Holzwolle, enthalten.

Des Weiteren schafft die Erfindung ein Verfahren zur Herstellung eines Verkleidungsteils mit reflektierender Oberfläche mit den Verfahrensschritten gemäß Anspruch 15, wobei in einer ersten Variante ein Gewebe eingelegt wird.

Der Aufbau der Zwischenschicht wurde schon weiter oben diskutiert. Bevorzugt wird die Zwischenschicht auf das Gewebe laminiert, insbesondere kaschiert, bevor es in das Spritzgusswerkzeug eingelegt wird.

Insbesondere ermöglicht es eine Zwischenschicht, auch retroreflektierende Gewebe in einem Spritzgussprozess zu verarbeiten, welche als refraktive Elemente Glaskörper enthalten.

Des Weiteren schafft die Erfindung ein Verfahren zur Herstellung eines retroreflektierenden Garns oder Zwirn mit den Schritten, dass zunächst eine retroreflektierende Folie in Bändchen geschnitten wird und anschließend die Bändchen mit Filamenten, vorzugsweise Filamenten aus Kunststoff, zu einem retroreflektierenden Garn versponnen oder zu einem Zwirn verzwirnt werden.

Die Trägerfilamente können erfindungsgemäß zunächst selbst zu einem oder mehreren Garnen versponnen werden und dann mit dem Bändchen verzwirnt werden, oder aber als einzelne Filamente direkt mit dem Bändchen zu einem Garn versponnen werden.

Ebenfalls ist es möglich, dass retroreflektierende Garn insbesondere mit anderen retroreflektierenden Garnen zu verzwirnen.

Im Folgenden wird eine zweite Ausführungsform der Erfindung, welche nämlich eine retroreflektierende Folie verwendet, näher beschrieben.

Dabei weist die Außenschicht zumindest bereichsweise eine Folie auf, die von außen sichtbar ist, und die Folie ist zumindest teilweise retroreflektierend.

Aufgrund ihrer Flexibilität bzw. ihrer Formbarkeit lässt sich eine retroreflektierende Folie an nahezu beliebige Konturen des Innenverkleidungsteils anpassen. Daher können fast sämtliche Bereiche des Innenverkleidungsteils mit einer derartigen Folie sichtseitig ausgestattet sein. Auch können mit einer Folie große Flächen abgedeckt werden.

Im Gegensatz dazu sind beispielsweise Katzenaugen aufgrund ihrer Steifheit und Sperrigkeit nur in wesentlich beschränkterem Rahmen einsetzbar. Auch ist das Rückstrahlverhalten von Katzenaugen im Vergleich zu den heute herstellbaren retroreflektierenden Folien weniger effektiv.

Des Weiteren lässt sich die retroreflektierende Folie als Bestandteil des Innenverkleidungsteils im Herstellungsverfahren direkt integrieren. Ein Beispiel hierfür ist das übliche Verfahren zur Herstellung eines Innenverkleidungsteils durch ein Spritzgussverfahren. Alternative Verfahren, um die Folie mit einer Trägerschicht bzw. Zwischenschichten zu verbinden, sind Spritzpressen, Hinterspritzpressen, Gießhautverfahren, Niederdruck-Spritzgießen, Kaskaden-Spritzgießen oder Kaschieren, insbesondere Laminieren.

Bei Katzenaugen dagegen ist es üblich, diese nachträglich an dem Innenverkleidungsteil zu befestigen, beispielsweise einzuclipsen, aufzukleben oder festzuschrauben.
Eine retroreflektierende Folie lässt sich zum einen als Designelement, beispielsweise in Form von Zierleisten, zur Erzeugung metallischer Oberflächen oder zur Realisierung eines Tag/Nacht-Designs, verwenden, insbesondere aber unter den Gesichtspunkten der Verkehrssicherheit einsetzen. So bietet sich insbesondere eine Türverkleidung für die Ausstattung mit einer retroreflektierenden Folie an, um die Erkennbarkeit von geöffneten Türen auch bei schlechten Sichtverhältnissen im Straßenverkehr zu erhöhen. Da sich nahezu beliebige Bereiche des Innenverkleidungsteils mit einer Außenschicht aus einer retroreflektierenden Folie gestalten lassen, können für die Anbringung der Folie die geeignetesten Bereiche gewählt werden. Beispielsweise ist es möglich, Kartentasche, Armauflage, Türöffner, Türbrüstungen, Türinserts, oder Haltegriff der Türverkleidung mit einer retroreflektierenden Folie als Oberfläche herzustellen.

Katzenaugen hingegen besitzen dagegen höchstens eingeschränkt die dekorativen Eigenschaften einer Folie.

Dadurch, dass das retroreflektierende Element als Folie in das Innenverkleidungsteil integriert ist, können zudem störende Kanten oder Vorsprünge in der Oberfläche des Verkleidungsteils, wie sie beispielsweise entstehen würden, wenn man ein zusätzliches Bauelement anbringen würde, vermieden werden.

Vorteilhafte Weiterbildungen der Erfindung werden in den abhängigen Ansprüchen beschrieben.

Eine vorteilhafte Weiterbildung der Erfindung sieht vor, dass die retroreflektierende Folie an der sichtseitigen Außenfläche in einer Trägerschicht eingebettete Glaskörper wie Glaskugeln oder -prismen aufweist.

Der retroreflektierende Effekt wird durch die geeignete Brechung bzw. Reflektion des einfallenden Lichts erreicht. Körper, mit denen sich ein derartiger Effekt erreichen lässt, sind beispielsweise oben angegebene Glaskugeln. Auch durch eine prismatische Form der Oberfläche, beispielsweise durch Prismenprägungen in geeigneten Kunststoffen, kann eine Retroreflexion erzeugt werden.

Vorzugsweise befindet sich an der Rückseite der Glaskörper, sei es direkt an der Oberfläche der Glaskörper oder durch ein oder mehrere transparente Schichten getrennt, eine Reflexionsschicht. In Verbindung mit den Glaskörpern wird hierdurch die retroreflektierende Eigenschaft einer derartigen Folie erreicht. Als Reflexionsschicht bietet sich beispielsweise ein Metallfilm oder eine Metallbeschichtung an.

Vorzugsweise sind die Glaskörper nach außen von einer transparenten Deckschicht abgedeckt.

Eine weitere vorteilhafte Weiterbildung der Erfindung sieht vor, dass die retroreflektierende Folie eine Dicke von 0,1 mm bis 1,5 mm aufweist.

Die Erfindung sieht vor, dass zwischen Trägerschicht und Außenschicht (mit retroreflektierender Schicht) eine Zwischenschicht angeordnet ist, wobei die Zwischenschicht eine Schaumschicht und zur Trägerschicht hin ein Vlies aufweist.

Eine wichtige Aufgabe der Zwischenschicht ist die Funktion als Sperrschicht zwischen Träger und retroreflektierender Folie während des Herstellungsprozesses des Innenverkleidungsteils. Üblicherweise werden die Verkleidungsteile mittels eines Spritzgussprozesses hergestellt. Allerdings hat sich herausgestellt, dass beim direkten Hinterspritzen der retroreflektierenden Folie aufgrund des hohen Drucks während des Spritzgussprozesses die retroreflektierende Folie in Mitleidenschaft gezogen werden kann. Durch den Einsatz einer Zwischenschicht lässt sich zum einen der Druck, der auf die Folie während des Spritzgussprozesses wirkt, reduzieren, sowie der direkte Kontakt von heißem Trägermaterial und Folie verhindern. Insbesondere wenn die retroreflektierende Folie selbst eine Deckschicht aufweist, die die Glaskörper schützt, lassen sich Innenverkleidungsteile mit einer retroreflektierenden Folie als Außenschicht mit einwandfreier Qualität herstellen.

Des Weiteren lassen sich mit einer Zwischenschicht die haptischen Eigenschaften des Innenverkleidungsteils verändern. So kann beispielsweise die Zwischenschicht eine Schaumschicht enthalten.

Der erfindungsgemäße zweischichtige Aufbau der Zwischenschicht ist insbesondere dann sinnvoll, wenn die Haftung zwischen Trägerschicht und Schaumschicht problematisch ist, beispielsweise falls die Schaumschicht ein PUR-Schnittschaum ist, und die Trägerschicht aus einem Polyolefin besteht. In diesem Falle bewirkt die Fasereigenschaft des Gewirkes, Gewebes oder Vlieses durch Verkrallung eine gute Verbindung zwischen Schaum und Trägerschicht.

Die zweischichtige Zwischenschicht besitzt vorteilhafterweise eine Dicke von 2 mm bis 5 mm, wobei hiervon das Vlies eine Dicke von 0,3 mm bis 1 mm aufweist.

Eine weitere vorteilhafte Weiterbildung der Erfindung sieht vor, dass die retroreflektierende Folie auf ihrer Sichtseite zumindest bereichsweise eine Narbung aufweist.

Eine derartige Narbung lässt sich insbesondere durch In-Mold-Graining (IMG) einbringen, d.h., das Werkzeug, in dem die Folie weiterverarbeitet wird, beispielsweise ein Spritzgusswerkzeug, in dem die Folie mit der Trägerschicht hinterspritzt wird, weist an seine Werkzeugoberfläche eine Narbung auf, die im Verfahren in die Oberfläche der Folie eingeprägt wird.

Eine weitere vorteilhafte Weiterbildung der Erfindung sieht vor, dass die Trägerschicht einen Kunststoff, vorzugsweise Polyolefine, insbesondere Polypropylen sowie ABS, POM, PC/ABS oder einen Naturstoff aufweist.

Derartige Materialien sind geeignet, um die notwendige mechanische Steifigkeit der Trägerschicht und somit des Verkleidungsteils zu gewährleisten. Insbesondere können diesen Materialien Zusatzstoffe, beispielsweise Mineralien wie Talkum, oder Fasern wie Glasfasern oder Holzfasern, zugefügt sein.

Des Weiteren offenbart die Erfindung ein Verfahren zur Herstellung eines Verkleidungsteils mit reflektierender Oberfläche mit den Verfahrensschritten gemäß Anspruch 15, wobei in einer zweiten Variante eine Folie eingelegt wird.

Grundsätzlich gelten für die oben genannte textile Variante sowie für die Folie gleiche mögliche Dekoraufbauten und auch Herstellungsverfahren. Bei der Folie tritt jedoch noch eine weitere Herstellungsvariante (In-Mould-Graining) hinzu.

Die Erfindung sieht vor, dass vor dem Spritzprägen eine Zwischenschicht auf die Rückseite der Folie angeordnet wird.

Materialien und Aufbau einer derartigen Zwischenschicht wurden schon weiter oben erwähnt. Vorzugsweise wird die Zwischenschicht auf die Rückseite der retroreflektierenden Folie laminiert, insbesondere kaschiert.

Besonders vorteilhaft ist es, eine retroreflektierende Folie, deren retroreflektierende Eigenschaft auf Glaskörpern beruht, mit einer auf der Rückseite angeordneten Zwischenschicht zu hinterspritzprägen. Da beim Hinterspritzprägen ein geringerer Druck auf die Folie ausgeübt wird als beim Hinterspritzen, wird die Folie in diesem Verfahren weniger beansprucht, wodurch das Risiko von Schäden gesenkt wird.

Eine weitere vorteilhafte Weiterbildung des Verfahrens sieht vor, dass während des Hinterspritzprägens eine Narbung in die sichtseitige Oberfläche der retroreflektierenden Folie eingebracht wird.

Dies ist insbesondere dann möglich, wenn die retroreflektierende Folie eine verformbare Deckschicht aufweist. Auch kann die retroreflektierende Folie mit einer zusätzlichen transparenten Schicht überzogen werden, die die Narbung aufnehmen kann. Vorzugsweise besitzt diese Deckschicht bzw. transparente Schicht eine mittlere Dicke von 0,01mm bis 0,05mm und besteht aus PC (Polycarbonat) oder PMMA (Polymehtylmethacrylat). Insbesondere kann die Folie vorgewärmt werden, um das Einbringen der Narbung zu erleichtern.

Die Erfindung wird nun anhand von zwei Ausführungsbeispielen, welche mit Figuren dargestellt sind, näher erläutert.

Dabei zeigt:
- Fig. 1: den Aufbau eines ersten erfindungsgemäßen Verkleidungsteils,
- Fig. 2: den Aufbau eines zweiten erfindungsgemä- ßen Verkleidungsteils,
- Fig. 3: einen Versuchsaufbau zur Messung der Retroreflexion.

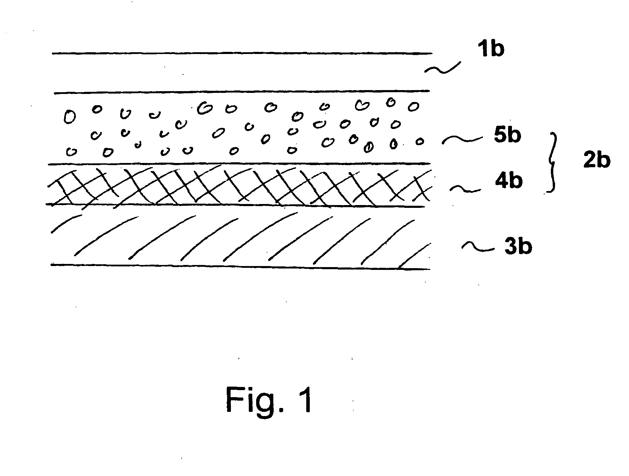

Das erste erfindungsgemäße Innenverkleidungsteil, das in Fig.1 dargestellt ist, weist eine Außenschicht 1b und eine Trägerschicht 3b auf. Die Außenschicht 1b besteht aus einem Gewebe, welches ein retroreflektierendes Garn aufweist.

Des Weiteren befindet sich zwischen Außenschicht 1b und Trägerschicht 3b eine Zwischenschicht 2b.

Die Zwischenschicht 2b besteht aus einer unter dem Gewebe 1b angeordneten Schaumschicht 5b mit einer Dicke von etwa 0,8 mm bis 1 mm und einem zwischen Schaumschicht 5b und Trägerschicht 3b angeordneten Vlies, hier ein Nadelvlies 4b, mit einer Dicke von 0,3 mm bis 1 mm. Das Verkleidungsteil ist somit vierschichtig.

Die Schaumschicht 5b besteht in diesem Fall aus PUR-Schaum. Das Nadelvlies 4b besteht aus PES-Fasern. Die Trägerschicht 3b besteht aus Polypropylen mit einem Anteil von 15 Gew.-% Langglasfasern.

Das erfindungsgemäße Innenverkleidungsteil kann insbesondere mit dem erfindungsgemäßen Verfahren hergestellt werden.

Zunächst wird das Gewebe mit einem Schnittschaum 5b und einem Vlies 4b laminiert. Dieses Verbundteil wird folgend in ein Spritzgusswerkzeug gelegt und dort hinterspritzt. Nach genügendem Abkühlen kann das Bauteil dem Spritzgusswerkzeug entnommen werden. Alternativ ist auch ein Hinterspritzprägeverfahren möglich.

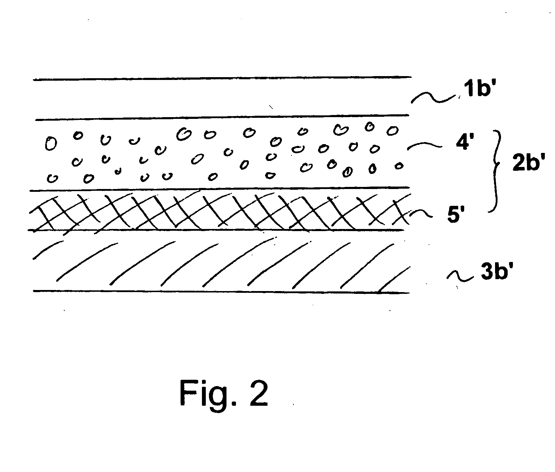

Fig. 2 zeigt den Aufbau eines zweiten erfindungsgemäßen Innenverkleidungsteils.

Das Innenverkleidungsteil weist eine Außenschicht 1b', welche von einer retroreflektierenden Folie gebildet wird, und eine Trägerschicht 3b' auf. Die Trägerschicht 3b' besteht hier aus PP mit einer Dicke von 2,5 mm.

Zwischen Außenschicht 1b' und Trägerschicht 3b' ist eine Zwischenschicht 2b' angeordnet. Diese Zwischenschicht 2b' umfasst eine Schaumschicht 4', welche rückseitig der retroreflektierenden Folie 1b' angeordnet ist, sowie ein Vlies 5', welches sich zwischen Schaumschicht 4' und Trägerschicht 3b' befindet. Die Schaumschicht 4' ist in diesem Fall ein PUR-Schnittschaum mit einer Dicke von 1mm bis 4mm. Das Vlies 5' ist ein Nadelvlies aus PES(Polyethersulfon)-Fasern mit einer Stärke im Bereich von 0,5mm bis 2mm. Das Vlies 5' ist mit der Schaumschicht 4' und der Trägerschicht 3' durchdrungen, wodurch es eine gute Verbindung zwischen diesen beiden Schichten ermöglicht.

Dieses Verkleidungsteil lässt sich mit dem erfindungsgemäßen Verfahren herstellen. Zunächst wird die retroreflektierende Folie mit der Schaumlage 4' und dem Vlies 5' laminiert. Dieser Verbund wird dann in ein Spritzgusswerkzeug eingelegt. In dem Spritzgusswerkzeug wird der Verbund hinterspritzt. Nach genügendem Abkühlen kann das Bauteil dem Werkzeug entnommen werden.

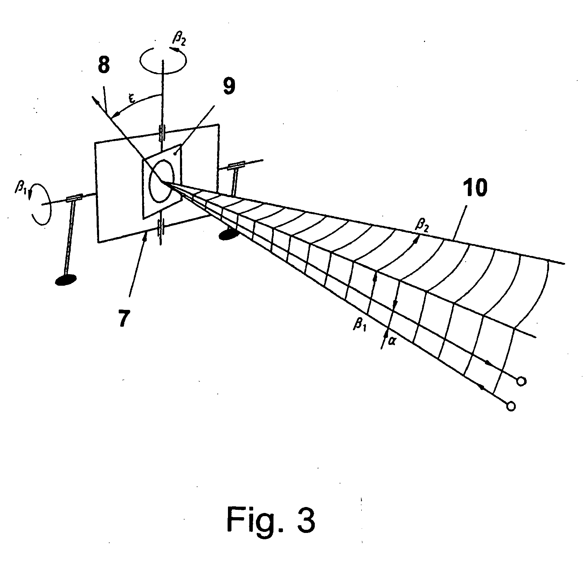

Fig. 3 zeigt einen beispielhaften Versuchsaufbau zur Ermittlung lichttechnischer Werte retroreflektierender Materialien.

Hierbei ist mit 7 eine alte Anordnung (Goniometer) gezeigt, das Bezugszeichen 8 bezeichnet die Richtung der entsprechenden Probe nach oben hin und die Probenebene ist mit dem Bezugszeichen 9 angegeben. Außerdem gibt es einen Verdrehungswinkel ε sowie einen Anleuchtungswinkel β₁ bzw. β₂.

Im Übrigen ist ein Beobachtungswinkel α gezeigt. Die Probennormale wird mit dem Bezugszeichen 10 bezeichnet.

Eine Ausführungsform der Erfindung zeigt ein retroreflektierendes Material, welches bei einem Beobachtungswinkel α von 0,2° und einem Anleuchtungswinkel β₁ von -4° einen typischen Wert R_{A} nach ASTM E 809 von 500 hat, minimal jedoch R_{A}≥300. Entsprechend ist bei einem Beobachtungswinkel von 0,33° und einem Anleuchtungswinkel β₁ von +5° ein typischer R_{A}-Wert von 330, minimal jedoch von R_{A}=250 gegeben. Diese Werte wurden jeweils nach der ASTM E 809 ermitteln Der Abstand der Probe (vorzugsweise einer Fahrzeugtür) zur Messanordnung bzw. zur Beleuchtung betrug im Versuchsaufbau gleichermaßen vorzugsweise etwa 20 m.

Ein erfindungsgemäßes Innenverkleidungsteil mit einer Fläche von 50x50 mm² und einer Anzahl von 380 reflektierenden Pixeln erreichte auf einer Fahrzeugtür, welche 70° geöffnet war (70° entspricht dem Winkel gegenüber der Probennormalen) bei einer Lichtaufbringung von 166x10⁻² cd einer Dichte von 664x10⁻⁴ cd/m². Hierbei handelt es sich um einen herausragenden Wert, welcher teilweise sogar aktive elektrische Leuchten übertrifft.

Beispielhaft wird ein erfindungsgemäßes Gewebe, welches als retroreflektierendes Dekor auf Innenverkleidungsteilen darstellen kann, nochmals näher erläutert.

Die statische Dehnung nach DIN 53360 beträgt vorzugsweise in Längsrichtung (Kette) zwischen 10 und 20%, vorzugsweise 13,9%. Dieselbe Angabe soll in Querrichtung (Schuss) zwischen 5 und 10%, vorzugsweise 8,2% betragen.

Die bleibende Dehnung nach DIN 53360 soll in Längs- und in Querrichtung jeweils 1 bis 4%, vorzugsweise 2% betragen.

Die Reibechtheit (trocken sowie nass) soll nach DIN EN ISO 1 05-X12 zwischen 3 und 7, vorzugsweise 4 bis 5 betragen.

Die Verschleißfestigkeit nach DIN EN ISO 12947 soll nach Martindale größer als 50000 sein, nach Schopper (PV3908) größer als 1000.

Für das Brennverhalten (Längsrichtung/Kette bzw. Querrichtung/Schuss) soll nach MVSS 3020 mm/min jeweils gegeben sein.

Der Oberflächenwiderstand nach DIN 54345 Teil 1 sollte zwischen 0,5 und 9x10⁻¹¹, vorzugsweise 1,8x10¹¹ Ω betragen.

Für Foggingverhalten nach DIN 75201-B soll 0,1 bis 0,3 mg, vorzugsweise 0,22 mg gegeben sein.

## Patentansprüche

1. Innenverkleidungsteil eines Fahrzeugs mit zumindest bereichsweise reflektierender Oberfläche, enthaltend eine Trägerschicht (3b, 3b') und eine Außenschicht (1b, 1b'), wobei die Außenschicht (1b, 1b') zumindest bereichsweise retroreflektierend ist und zwischen Trägerschicht (3b, 3b') und Außenschicht (1b, 1b') eine Zwischenschicht (2b, 2b') angeordnet ist, **dadurch gekennzeichnet dass** die Zwischenschicht eine Schaumschicht (5b, 4') und zur Trägerschicht hin ein Vlies (4b, 5') aufweist.

2. Innenverkleidungsteil nach Anspruch 1, **dadurch gekennzeichnet, dass** die Außenschicht (1b) zumindest bereichsweise ein Gewebe aufweist, das von außen sichtbar ist, und das Gewebe zumindest retroreflektierendes Garn oder Zwirn enthält.

3. Verkleidungsteil nach Anspruch 2, **dadurch gekennzeichnet, dass** das Garn oder der Zwirn mehrere miteinander versponnene Filamente aufweist, wobei die Filamente zumindest teilweise retroreflektierend sind.

4. Verkleidungsteil nach Anspruch 3, **dadurch gekennzeichnet, dass** die nicht reflektierenden Filamente zumindest teilweise aus Kunststoff, vorzugsweise aus PP (Polypropylen), PE (Polyethylen), PES (Polyethersulfon), Polyester oder PA (Polyamid), bestehen.

5. Verkleidungsteil nach einem der Ansprüche 3 bis 4, **dadurch gekennzeichnet, dass** die retroreflektierenden Filamente zumindest teilweise retroreflektierende Bändchen sind, die eine Breite im Bereich von 0,2 mm bis 2 mm und eine Dicke im Bereich von 0,1 mm bis 1 mm aufweisen.

6. Verkleidungsteil nach einem der vorhergehenden Ansprüche, **dadurch gekennzeichnet, dass** die Zwischenschicht (2b, 2b') eine Dicke von 1 mm bis 5 mm aufweist.

7. Verkleidungsteil nach einem der vorhergehenden Ansprüche, **dadurch gekennzeichnet, dass** die Trägerschicht (3b, 3b') einen Kunststoff, vorzugsweise ein Polyolefin, insbesondere Polypropylen (PP), ABS, POM, PC/ABS, und/oder einen Naturstoff, insbesondere mit Naturfasern verstärktes PP, aufweist.

8. Innenverkleidungsteil nach Anspruch 1, **dadurch gekennzeichnet, dass** die Außenschicht (1b') zumindest bereichsweise eine Folie aufweist, die von außen sichtbar ist, und die Folie zumindest teilweise retroreflektierend ist.

9. Verkleidungsteil nach Anspruch 8, **dadurch gekennzeichnet, dass** die retroreflektierende Folie an der sichtseitige Außenfläche in eine Trägerschicht (3b') eingebettete Glaskörper wie Glaskugeln oder -Prismen aufweist.

10. Innenverkleidungsteil nach einem der vorhergehenden Ansprüche 8 bis 9, **dadurch gekennzeichnet, dass** die retroreflektierende Folie eine Dicke im Bereich von 0,1mm bis 1.5mm aufweist.

11. Verkleidungsteil nach Anspruch 10, **dadurch gekennzeichnet, dass** die Zwischenschicht (2b, 2b') zusätzlich eine Folie, ein Gewirke und/oder Gewebe aufweist.

12. Innenverkleidungsteil nach einem der vorhergehenden Ansprüche 7 bis 11, **dadurch gekennzeichnet, dass** die Zwischenschicht (2b, 2b') eine Dicke von 0,5 mm bis 5 mm aufweist.

13. Verkleidungsteil nach einem der vorhergehenden Ansprüche 7 bis 12, **dadurch gekennzeichnet, dass** die retroreflektierende Folie auf ihrer Sichtseite eine Narbung aufweist.

14. Verkleidungsteil nach einem der vorhergehenden Ansprüche 7 bis 13, **dadurch gekennzeichnet, dass** die Trägerschicht (3b, 3b') einen Kunststoff, vorzugsweise Polyolefine, insbesondere Polypropylen (PP), sowie ABS, POM, PC/ABS, und/oder einen Naturstoff, wie beispielsweise mit Naturfasern verstärktes PP, aufweist.

15. Verfahren zur Herstellung eines Verkleidungsteils mit reflektierender Oberfläche, enthaltend die Schritte: a) Einlegen einer zumindest bereichsweise retroreflektierenden Folie oder Einlegen eines Gewebes, welches zumindest teilweise ein reflektierendes oder retroreflektierendes Garn oder Zwirn aufweist, in eine Spritzgussform; b) Hinterspritzen oder Hinterspritzprägen der Folie bzw. des Gewebes mit einer spritzfähigen Masse, vorzugsweise mit einer thermoplastischen Kunststoffmasse,
**dadurch gekennzeichnet, dass**
vor dem Hinterspritzen oder Hinterspritzprägen eine Zwischenschicht (2b, 2b') auf die Rückseite des Gewebes (1b) bzw. der Folie (1b') angeordnet wird, wobei diese Zwischenschicht zum Gewebe bzw. zur Folie hin eine Schaumschicht (5b, 4') sowie auf der dem Gewebe bzw. der Folie abgewandten Seite der Schaumschicht ein Vlies (4b, 5') aufweist.

## Claims

1. An interior trim piece for a vehicle with a surface which is reflective at least in regions, containing a supporting layer (3b, 3b') and an outer layer (1b, 1b'), the outer layer (1b, 1b') being retroreflective at least in regions and an intermediate layer (2b, 2b') being arranged between the supporting layer (3b, 3b') and the outer layer (1b, 1b'), **characterised in that** the intermediate layer has a foam layer (5b, 4') and, towards the supporting layer, a non-woven fabric (4b, 5').

2. An interior trim piece according to Claim 1, **characterised in that** the outer layer (1b) at least in regions has a woven fabric which is visible from the outside, and the woven fabric contains at least retroreflective yarn or twine.

3. A trim piece according to Claim 2, **characterised in that** the yarn or the twine has a plurality of filaments which are spun together, the filaments being at least in part retroreflective.

4. A trim piece according to Claim 3, **characterised in that** the non-reflective filaments consist at least in part of plastics material, preferably of PP (polypropylene), PE (polyethylene), PES (polyether sulphone), polyester or PA (polyamide).

5. A trim piece according to one of Claims 3 to 4, **characterised in that** the retroreflective filaments are at least in part retroreflective tapes which have a width in the range from 0.2 mm to 2 mm and a thickness in the range from 0.1 mm to 1 mm.

6. A trim piece according to one of the preceding claims, **characterised in that** the intermediate layer (2b, 2b') has a thickness of 1 mm to 5 mm.

7. A trim piece according to one of the preceding claims, **characterised in that** the supporting layer (3b, 3b') has a plastics material, preferably a polyolefin, in particular polypropylene (PP), ABS, POM, PC/ABS, and/or a natural substance, in particular PP reinforced with natural fibres.

8. An interior trim piece according to Claim 1, **characterised in that** the outer layer (1b') at least in regions has a film which is visible from the outside, and the film is at least in part retroreflective.

9. A trim piece according to Claim 8, **characterised in that** the retroreflective film on the visible-side outer surface has glass bodies, such as glass spheres or glass prisms, embedded in a supporting layer (3b').

10. An interior trim piece according to one of the preceding Claims 8 to 9, **characterised in that** the retroreflective film has a thickness in the range from 0.1 mm to 1.5 mm.

11. A trim piece according to Claim 10, **characterised in that** the intermediate layer (2b, 2b') additionally has a film, a knitted fabric and/or woven fabric.

12. An interior trim piece according to one of the preceding Claims 7 to 11, **characterised in that** the intermediate layer (2b, 2b') has a thickness of 0.5 mm to 5 mm.

13. A trim piece according to one of the preceding Claims 7 to 12, **characterised in that** the retroreflective film has a grain on its visible side.

14. A trim piece according to one of the preceding Claims 7 to 13, **characterised in that** the supporting layer (3b, 3b') has a plastics material, preferably polyolefins, in particular polypropylene (PP), and also ABS, POM, PC/ABS, and/or a natural substance, such as for example PP reinforced with natural fibres.

15. A method for the production of a trim piece with reflective surface, containing the steps: a) laying a film which is retroreflective at least in regions or laying a woven fabric which has at least in part a reflective or retroreflective yarn or twine, in an injection mould; b) back-injecting or back-injection compression moulding the film or the woven fabric with a sprayable compound, preferably with a thermoplastic plastics compound,
**characterised in that** before the back-injection or back-injection compression moulding an intermediate layer (2b, 2b') is arranged on the reverse side of the woven fabric (1b) or the film (1b'), this intermediate layer towards the woven fabric or towards the film having a foam layer (5b, 4'), and also on the side of the foam layer remote from the woven fabric or the film a non-woven fabric (4b, 5').

## Revendications

1. Pièce d'habillage intérieur d'un véhicule avec une surface réfléchissante au moins par segments, contenant une couche de support (3b, 3b') et une couche externe (1b, 1b'), dans laquelle la couche externe (1b, 1b') est rétroréfléchissante au moins par segments et une couche intermédiaire (2b, 2b') est aménagée entre la couche de support (3b, 3b') et la couche externe (1b, 1b'), **caractérisée en ce que** la couche intermédiaire présente une couche de mousse (5b, 4') et, vers la couche de support, un non-tissé ( 4b, 5').

2. Pièce d'habillage intérieur selon la revendication 1, **caractérisée en ce que** la couche externe (1b) présente au moins par segments un tissu qui est visible de l'extérieur et **en ce que** le tissu contient un fil ou un fil retors au moins rétroréfléchissant.

3. Pièce d'habillage selon la revendication 2, **caractérisée en ce que** le fil ou le fil retors présente plusieurs filaments filés entre eux, les filaments étant au moins en partie rétroréfléchissants.

4. Pièce d'habillage selon la revendication 3, **caractérisée en ce que** les filaments non réfléchissants sont constitués au moins en partie d'un matériau synthétique, de préférence de PP (polypropylène), de PE (polyéthylène), de PES (polyéthersulfone), de polyester ou de PA (polyamide).

5. Pièce d'habillage selon l'une quelconque des revendications 3 à 4, **caractérisée en ce que** les filaments rétroréfléchissants sont des rubans au moins en partie rétroréfléchissants qui présentent une largeur dans la plage de 0,2 mm à 2 mm et une épaisseur dans la plage de 0,1 mm à 1 mm.

6. Pièce d'habillage selon l'une quelconque des revendications précédentes, **caractérisée en ce que** la couche intermédiaire (2b, 2b') présente une épaisseur de 1 mm à 5 mm.

7. Pièce d'habillage selon l'une quelconque des revendications précédentes, **caractérisée en ce que** la couche de support (3b, 3') présente un matériau synthétique, de préférence une polyoléfine, en particulier du polypropylène (PP), de l'ABS, du POM, du PC/ABS, et/ou un matériau naturel, en particulier du PP renforcé de fibres naturelles.

8. Pièce d'habillage intérieur selon la revendication 1, **caractérisée en ce que** la couche externe (1b') présente au moins par segments une feuille qui est visible de l'extérieur et **en ce que** la feuille est au moins en partie rétroréfléchissante.

9. Pièce d'habillage selon la revendication 8, **caractérisée en ce que** la feuille rétroréfléchissante présente sur la surface externe côté visible des corps en verre noyés dans une couche de support (3'), tels que des billes ou des prismes de verre.

10. Pièce d'habillage intérieur selon l'une quelconque des revendications précédentes 8 à 9, **caractérisée en ce que** la feuille rétroréfléchissante présente une épaisseur dans la plage de 0,1 mm à 1,5 mm.

11. Pièce d'habillage selon la revendication 10, **caractérisée en ce que** la couche intermédiaire (2b, 2b') présente en outre une feuille, un tissu à mailles et/ou un tissu.

12. Pièce d'habillage intérieur selon l'une quelconque des revendications 7 à 11, **caractérisée en ce que** la couche intermédiaire (2b, 2b') présente une épaisseur de 0,5 mm à 5 mm.

13. Pièce d'habillage selon l'une quelconque des revendications précédentes 7 à 12, **caractérisée en ce que** la feuille rétroréfléchissante présente sur son côté visible un grainage.

14. Pièce d'habillage selon l'une quelconque des revendications précédentes 7 à 13, **caractérisée en ce que** la couche de support (3b, 3b') présente un matériau synthétique, de préférence des polyoléfines, en particulier du polypropylène (PP), ainsi que de l'ABS, du POM, du PC/ABS, et/ou un matériau naturel, tel que du PP renforcé de fibres naturelles.

15. Procédé de fabrication d'une pièce d'habillage ayant une surface réfléchissante, contenant les étapes suivantes : a) insertion d'une feuille rétroréfléchissante au moins par segments ou insertion d'un tissu, qui présente au moins en partie un fil ou un fil retors réfléchissant ou rétroréfléchissant, dans un moule d'injection ; b) surmoulage par injection ou surmoulage par estampage-injection de la feuille ou du tissu avec une masse injectable, de préférence avec une masse de matériau synthétique thermoplastique,
**caractérisé en ce que**,
avant le surmoulage par injection ou le surmoulage par estampage - injection, une couche intermédiaire (2b, 2b') est aménagée sur le dos du tissu (1b) ou de la feuille (1b'), cette couche intermédiaire présentant une couche de mousse (5b, 4') vers le tissu ou vers la feuille ainsi qu'un non-tissé (4b, 5') sur le côté de la couche de mousse opposé au tissu ou à la feuille.
